# EUROPÄISCHE PATENTANMELDUNG

(11) **EP 4 283 333 A1**
(43) Veröffentlichungstag der Anmeldung: **29.11.2023**
(21) Anmeldenummer: 23157567.1
(22) Anmeldetag: 20.02.2023
(51) Int. Cl.: G01S 7/497

(54) **OPTISCHE EINHEIT, TESTSYSTEM UND VERFAHREN ZUM HERSTELLEN EINER OPTISCHEN EINHEIT**

(30) Priorität: 23.05.2022 DE 102022112920
(71) Anmelder: dSPACE GmbH, 33102 Paderborn (DE)
(72) Erfinder: Lachmair, Jan, 33619 Bielefeld (DE); Wolsfeld, Rainer, 33102 Paderborn (DE); Schukat, Stefan, 33102 Paderborn (DE); Himmler, Andreas, 33102 Paderborn (DE); Sievers, Gregor, 33102 Paderborn (DE); Hagemeyer, Jens, 33619 Bielefeld (DE); Jungewelter, Dirk, 33619 Bielefeld (DE)

(57) **Zusammenfassung**

Die Erfindung betrifft eine optische Einheit (10; 110) zur Transmission eines synthetisch erzeugten optischen Signals (S) für ein Testsystem (1; 101) eines LiDAR-Sensors (12; 112), mit einer Trägereinrichtung (14; 114) zur Aufnahme zumindest eines Lichtwellenleiters (16; 116), wobei die Trägereinrichtung (14; 114) zumindest eine orthogonal zu einer Stirnseite (14a; 114a) der Trägereinrichtung (14; 114) ausgebildete Öffnung (20; 120) aufweist, in welche der zumindest eine Lichtwellenleiter (16; 116) eingefügt ist, und zumindest einer mit der Stirnseite (14a; 114a) der Trägereinrichtung (14; 114) verbundenen Mikrolinse (18; 118), wobei die einander zugewandten Stirnseiten (14a; 114a, 18a; 118a) der Trägereinrichtung (14; 114) und der zumindest einen Mikrolinse (18; 118) jeweils planar ausgebildet sind. Die Erfindung betrifft ferner ein Testsystem (1; 101) und ein Verfahren zum Herstellen einer optischen Einheit (10; 110).

## Beschreibung

Die vorliegende Erfindung betrifft eine optische Einheit zur Transmission eines synthetisch erzeugten optischen Signals für ein Testsystem eines LiDAR-Sensors.

Die vorliegende Erfindung betrifft des Weiteren ein Testsystem für einen LiDAR-Sensors.

Darüber hinaus betrifft die Erfindung ein Verfahren zum Herstellen einer optischen Einheit zur Transmission eines synthetisch erzeugten optischen Signals für ein Testsystem eines LiDAR-Sensors.

### Stand der Technik

LiDAR Lichtmesssysteme werden neben weiteren Anwendungen zur optischen Abstands- und Geschwindigkeitsmessung eingesetzt. LiDAR Lichtmesssysteme senden Licht aus und messen die Laufzeit, in der das Licht nach der Reflexion an einem Objekt wieder zum LiDAR Lichtmesssystem zurückkommt. Aus der bekannten Geschwindigkeit des Lichts folgt die Entfernung des Objekts vom LiDAR Lichtmesssystem.

Beispiele für Anwendungsbereiche von LiDAR Lichtmesssystemen sind mobile Instrumente zur optischen Entfernungsmessung und LiDAR Lichtmesssysteme für das Anwendungsfeld Automotive, nämlich Fahrerassistenzsysteme und autonomes Fahren sowie für Aerospace Anwendungen.

DE 102007057372 A1 offenbart ein Testsystem für Lidarsensoren mit einer Triggereinheit, durch welche als Reaktion auf den Empfang eines Signals eines zu testenden Lidarsensors ein Signalgenerator derart angesteuert wird, dass durch eine Signalerzeugungseinheit des Signalgenerators ein vorgegebenes synthetisch erzeugtes oder aufgezeichnetes optisches Signal ausgegeben wird.

DE 102017110790 A1 offenbart eine Simulationsvorrichtung für ein LiDAR - Lichtmesssystem mit einem LiDAR Lichtempfangssensor, wobei in der Ebene des LiDAR - Lichtempfangssensor ein Lichtsender vorhanden ist, wobei ein weiterer Lichtsender neben dem Lichtsender in der Ebene des LiDAR - Lichtempfangssensors angeordnet ist, und wobei ein Rechner die Freischaltung des LiDAR - Lichtempfangssensors und die Zeitspanne zur Abgabe eines Lichtsignals über den Lichtsender und/oder den weiteren Lichtsender überwacht und den Signaleingang des Lichtsignals von dem Lichtsender oder dem weiteren Lichtsender registriert.

Ein Problem bei dem Testen von LiDAR-Sensoren unter Verwendung eines Signalgenerators besteht darin, dass sämtliche Lichtquellen bzw. Pixel des Signalgenerators bzw. LiDAR OTA-Systems in einem Punkt überlagert werden müssen. Dieser Punkt entspricht idealerweise einer Aperturblende des zu testenden LiDAR-Sensors.

Die Problemstellung ist, diese gezielte Strahlführung unter ökonomischen Gesichtspunkten auf den Signalgenerator zu übertragen.

Es ist daher Aufgabe der Erfindung, eine optische Einheit zur Transmission eines synthetisch erzeugten optischen Signals für ein Testsystem eines LiDAR-Sensors bereitzustellen, welche eine gezielte Strahlführung im Rahmen eines optimierten Kosten-Nutzen Verhältnisses ermöglicht.

### Offenbarung der Erfindung

Die Aufgabe wird erfindungsgemäß durch eine optische Einheit zur Transmission eines synthetisch erzeugten optischen Signals für ein Testsystem eines LiDAR-Sensors mit den Merkmalen des Patentanspruchs 1 gelöst.

Die Aufgabe wird erfindungsgemäß des Weiteren durch eine alternative optische Einheit zur Transmission eines synthetisch erzeugten optischen Signals für ein Testsystem eines LiDAR-Sensors mit den Merkmalen des Patentanspruchs 4 gelöst.

Die Aufgabe wird erfindungsgemäß ferner durch ein Testsystem für einen LiDAR-Sensors mit den Merkmalen des Patentanspruchs 10 gelöst.

Des Weiteren wird die Aufgabe durch ein Verfahren zum Herstellen einer optischen Einheit zur Transmission eines synthetisch erzeugten optischen Signals für ein Testsystem eines LiDAR-Sensors mit den Merkmalen des Patentanspruchs 15 gelöst.

Die Erfindung betrifft eine optische Einheit zur Transmission eines synthetisch erzeugten optischen Signals für ein Testsystem eines LiDAR-Sensors.

Die optische Einheit umfasst eine Trägereinrichtung zur Aufnahme zumindest eines Lichtwellenleiters, wobei die Trägereinrichtung zumindest eine orthogonal zu einer Stirnseite der Trägereinrichtung ausgebildete Öffnung aufweist, in welche der zumindest eine Lichtwellenleiter eingefügt ist.

Die optische Einheit umfasst des Weiteren zumindest eine mit der Stirnseite der Trägereinrichtung verbundene Mikrolinse, wobei die einander zugewandten Stirnseiten der Trägereinrichtung und der zumindest einen Mikrolinse jeweils planar ausgebildet sind, wobei dem in die zumindest eine Öffnung der Trägereinrichtung eingefügten zumindest einen Lichtwellenleiter die zumindest eine Mikrolinse zugeordnet ist.

Das durch den zumindest einen Lichtwellenleiter übertragene synthetisch erzeugte optische Signal, insbesondere ein Laserpuls oder ein Leuchtdiodensignal, ist durch die zugeordnete Mikrolinse auf einen LiDAR-Sensor gerichtet. Der zumindest eine Lichtwellenleiter ist in der Trägereinrichtung versetzt zu einer optischen Achse der dem Lichtwellenleiter zugeordneten Mikrolinse angeordnet.

Die Erfindung betrifft ferner eine alternative optische Einheit zur Transmission eines synthetisch erzeugten optischen Signals für ein Testsystem eines LiDAR-Sensors.

Die optische Einheit umfasst eine Trägereinrichtung zur Aufnahme zumindest eines Lichtwellenleiters, wobei die Trägereinrichtung zumindest eine orthogonal zu einer Stirnseite der Trägereinrichtung ausgebildete Öffnung aufweist, in welche zumindest ein Lichtwellenleiter eingefügt ist.

Des Weiteren umfasst die optische Einheit zumindest eine mit der Stirnseite der Trägereinrichtung verbundene Mikrolinse, wobei die einander zugewandten Stirnseiten der Trägereinrichtung und der zumindest einen Mikrolinse jeweils planar ausgebildet sind, wobei dem in die zumindest eine Öffnung der Trägereinrichtung eingefügten zumindest einen Lichtwellenleiter die zumindest eine Mikrolinse zugeordnet ist.

Der zumindest eine Lichtwellenleiter ist dabei auf einer optischen Achse der dem Lichtwellenleiter zugeordneten zumindest einen Mikrolinse angeordnet.

Die zumindest eine Mikrolinse ist ferner dazu ausgebildet, das durch den zumindest einen Lichtwellenleiter übertragene synthetisch erzeugte optische Signal, insbesondere einen Laserpuls oder ein Leuchtdiodensignal, auf eine zu der zumindest einen Mikrolinse benachbart angeordnete weitere Linse zu kollimieren. Das synthetisch erzeugte optische Signal ist überdies durch die weitere Linse auf einen LiDAR-Sensor gerichtet.

Darüber hinaus betrifft die Erfindung ein Testsystem für einen LiDAR-Sensors. Das Testsystem umfasst eine Mehrzahl von, insbesondere relativ zu einem LiDAR-Sensor stationär oder verfahrbar angeordneten, erfindungsgemäßen optischen Einheiten sowie einen LiDAR-Sensor, auf welchen das durch die optischen Einheiten übertragene synthetisch erzeugte optische Signal gerichtet ist, wobei die Mehrzahl von optischen Einheiten in einem Erfassungsbereich des LiDAR-Sensors angeordnet ist.

Die Erfindung betrifft des Weiteren ein Verfahren zum Herstellen einer optischen Einheit zur Transmission eines synthetisch erzeugten optischen Signals für ein Testsystem eines LiDAR-Sensors.

Das Verfahren umfasst ein Bereitstellen einer Trägereinrichtung zur Aufnahme zumindest eines Lichtwellenleiters sowie ein Einbringen zumindest einer orthogonal zu einer Stirnseite der Trägereinrichtung ausgebildeten Öffnung in die Trägereinrichtung.

Ferner umfasst das Verfahren ein Einfügen des zumindest einen Lichtwellenleiters in die zumindest eine Öffnung und Fixieren des zumindest einen Lichtwellenleiters in der zumindest einen Öffnung durch eine Hülse sowie ein plan Schleifen der der Linse zugewandten Stirnseite des zumindest einen Lichtwellenleiters.

Überdies umfasst das Verfahren ein Polieren eines Faserendes des zumindest einen Lichtwellenleiter und ein Zusammenfügen und Verkleben der Trägereinrichtung mit der zumindest einen Mikrolinse.

Eine Idee der vorliegenden Erfindung ist es, durch Vorsehen der zumindest einen mit der Stirnseite der Trägereinrichtung verbundenen Mikrolinse sowie der versetzten Anordnung des zumindest einen Lichtwellenleiters in der Trägereinrichtung zur optischen Achse der dem Lichtwellenleiter zugeordneten Mikrolinse eine Miniaturisierung des optischen Frontends von LiDAR OTA (over the air)-Testsystemen zu ermöglichen.

Die erfindungsgemäße optische Einheit ermöglicht ferner eine Erhöhung von Pixeldichte und Winkelauflösung ohne die Notwendigkeit, einen Abstand zum LiDAR-Testsensor zu erhöhen.

Somit kann des Weiteren die Realisierbarkeit skalierbarer, monolithischer Frontend-Module zur flexiblen Anpassung des OTA-Testsystems an Kundenanforderungen verbessert werden. Das OTA-Testsystem kann dabei entweder stationär oder als mechanisch verfahrbare Frontend-Module bzw. optische Einheiten umgesetzt werden.

Aufgrund des modularen Aufbaus des OTA-Testsystems umfassend eine Mehrzahl optischer Einheiten kann der Einsatz von Mikrolinsen-Arrays unter ökonomischen Gesichtspunkten in vorteilhafter Weise realisiert werden. Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der zumindest eine, in die zumindest eine Öffnung der Trägereinrichtung eingefügte, Lichtwellenleiter parallel, insbesondere orthogonal versetzt, zur optischen Achse der zumindest einen Mikrolinse angeordnet ist.

Die versetzte Anordnung des Lichtwellenleiters ermöglicht in vorteilhafter Weise eine Umlenkung des optischen Signals durch die zumindest eine Mikrolinse der optischen Einheit, sodass das optische Signal exakt auf den LiDAR-Sensor ausrichtbar ist.

Gemäß einer weiteren bevorzugten Weiterbildung der Erfindung ist vorgesehen, dass eine Abmessung der zumindest einen Mikrolinse derart ausgebildet ist, dass eine Länge eines Signalpfads des synthetisch erzeugten optischen Signals innerhalb der zumindest einen Mikrolinse einer Brennweite der Mikrolinse entspricht. Somit wird das optische Signal nach Austritt aus der Mikrolinse entsprechend in die gewünschte Richtung gelenkt.

Gemäß einer weiteren bevorzugten Weiterbildung der Erfindung ist vorgesehen, dass die weitere Linse in einem vorgegebenen Abstand zu der zumindest einen Mikrolinse entlang der optischen Achse der Mikrolinse angeordnet ist, wobei die weitere Linse an einer Austrittsseite des synthetisch erzeugten optischen Signals konvex ausgebildet ist. Dies ermöglicht in vorteilhafter Weise ein Umlenken des optischen Signals in Richtung des LiDAR-Sensors.

Gemäß einer weiteren bevorzugten Weiterbildung der Erfindung ist vorgesehen, dass die zumindest eine Mikrolinse einstückig, insbesondere aus Kunststoff oder Glas, ausgebildet ist, und wobei die zumindest eine Mikrolinse an einer Austrittsseite des synthetisch erzeugten optischen Signals konvex ausgebildet ist. Dies ermöglicht in vorteilhafter Weise ein Umlenken des optischen Signals in Richtung des LiDAR-Sensors.

Gemäß einer weiteren bevorzugten Weiterbildung der Erfindung ist vorgesehen, dass der zumindest eine Lichtwellenleiter durch eine Hülse, insbesondere eine Ferrule, in der in der Trägereinrichtung ausgebildeten zumindest einen Öffnung fixiert ist, wobei die Hülse mit dem jeweiligen Lichtwellenleiter und/oder der jeweiligen Öffnung verpresst oder verklebt ist.

Dadurch kann der Lichtwellenleiter in der Öffnung exakt positioniert werden. Auch nach Aushärtung eines Klebstoffes ergibt sich somit keine Positionsänderung des Lichtwellenleiters in der Öffnung.

Gemäß einer weiteren bevorzugten Weiterbildung der Erfindung ist vorgesehen, dass ein, insbesondere planar ausgebildeter, axialer Endabschnitt des zumindest einen Lichtwellenleiters an der, der Trägereinrichtung zugewandten, Stirnseite der zumindest einen Mikrolinse, insbesondere an der Stirnseite der zumindest einen Mikrolinse anliegend, angeordnet ist. Dies ermöglicht eine effiziente Übertragung des optischen Signals von dem Lichtwellenleiter an die Mikrolinse ohne das Auftreten von Streulichtverlusten.

Gemäß einer weiteren bevorzugten Weiterbildung der Erfindung ist vorgesehen, dass die optische Einheit im Wesentlichen streifenförmig ausgebildet ist, und wobei die optische Einheit mit einer Mehrzahl von in Längsrichtung und in Querrichtung ausgerichteten Reihen von Mikrolinsen bestückt ist. Durch Vorsehen der Mehrzahl von Lichtwellenleitern kann somit in vorteilhafter Weise eine höhere Pixelauflösung der optischen Einheit erreicht werden.

Gemäß einer weiteren bevorzugten Weiterbildung der Erfindung ist vorgesehen, dass die Mehrzahl von optischen Einheiten zueinander benachbart, im Wesentlichen halbkreisförmig, um den LiDAR-Sensor herum angeordnet sind. Somit kann durch das Testsystem eine reale Verkehrssituation mit einem identischen Erfassungsbereich des LiDAR-Sensors nachbilden.

Gemäß einer weiteren bevorzugten Weiterbildung der Erfindung ist vorgesehen, dass die optischen Einheiten dazu ausgebildet sind, dass durch die Lichtwellenleiter eingespeiste synthetisch erzeugte optische Signal um bis zu 20° gegenüber einer Ausrichtung der Lichtwellenleiter umzulenken, insbesondere zu brechen. Dies entspricht in vorteilhafter Weise einem Öffnungswinkel des LiDAR-Sensors von 20°.

Gemäß einer weiteren bevorzugten Weiterbildung der Erfindung ist vorgesehen, dass eine Bestückung der optischen Einheiten mit Mikrolinsen in Abhängigkeit einer Position der jeweiligen optischen Einheit relativ zum LiDAR-Sensor variierbar ist. Somit kann eine für unterschiedliche Verkehrssituationen optimale Linsenanordnung ermöglicht werden.

Gemäß einer weiteren bevorzugten Weiterbildung der Erfindung ist vorgesehen, dass eine in einem Mittenabschnitt der im Wesentlichen halbkreisförmigen Anordnung der optischen Einheiten um den LiDAR-Sensor herum angeordnete optische Einheit eine größere Anzahl von Mikrolinsen als in Randbereichen der halbkreisförmigen Anordnung positionierte optischen Einheiten aufweist. Dies ermöglicht eine feinere Auflösung beispielsweise für Autobahnfahrten als für Verkehrssituationen in einem urbanen Bereich.

Die hierin beschriebenen Merkmale des Verfahrens zum Bestimmen eines Rechenaufwands eines virtuellen Tests einer Vorrichtung zur zumindest teilweisen autonomen Führung eines Kraftfahrzeugs sind ebenso auf die erfindungsgemäße Testeinheit zum Bestimmen eines Rechenaufwands eines virtuellen Tests einer Vorrichtung zur zumindest teilweisen autonomen Führung eines Kraftfahrzeugs und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: eine schematische Darstellung einer optischen Einheit zur Transmission eines synthetisch erzeugten optischen Signals für ein Testsystem eines LiDAR-Sensors gemäß einer ersten Ausführungsform der Erfindung;
- Fig. 2: eine schematische Darstellung der optischen Einheit zur Transmission des synthetisch erzeugten optischen Signals für das Testsystem des LiDAR-Sensors gemäß einer zweiten Ausführungsform der Erfindung;
- Fig. 3: eine schematische Darstellung eines Testsystems des LiDAR-Sensors gemäß Ausführungsformen der Erfindung;
- Fig. 4: eine Draufsicht des Testsystems des LiDAR-Sensors gemäß Ausführungsformen der Erfindung; und
- Fig.5: ein Verfahren zum Herstellen einer optischen Einheit zur Transmission eines synthetisch erzeugten optischen Signals für ein Testsystem eines LiDAR-Sensors gemäß Ausführungsformen der Erfindung.

Sofern nicht anders angegeben, bezeichnen gleiche Bezugszeichen gleiche Elemente der Zeichnungen.

### Ausführliche Beschreibung der Ausführungsformen

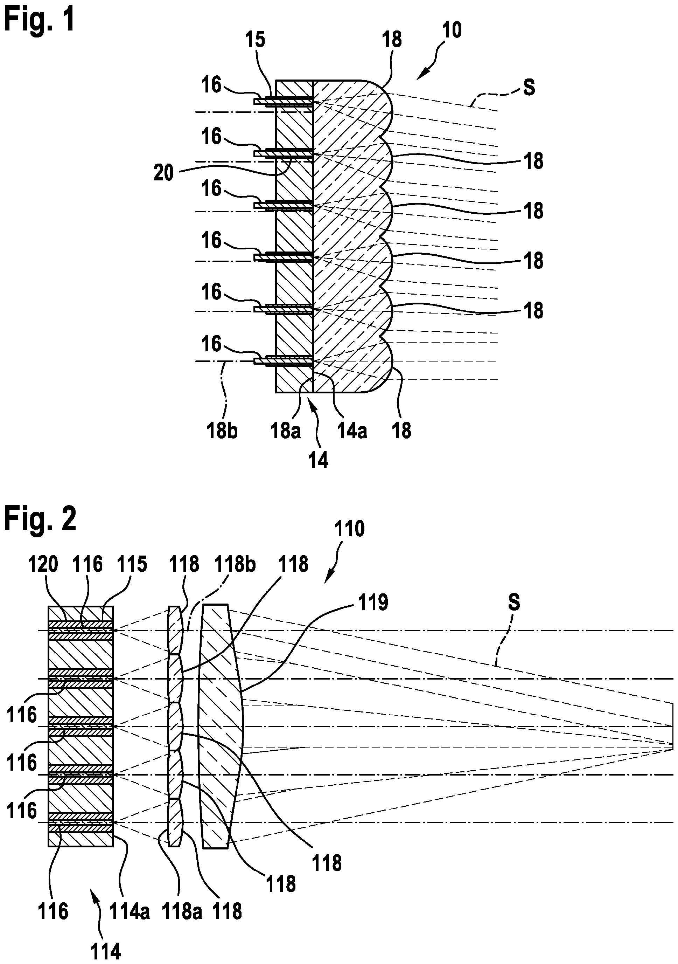

Die in Fig. 1 gezeigte optische Einheit 10 zur Transmission eines synthetisch erzeugten optischen Signals S für ein Testsystem 1 eines LiDAR-Sensors 12 umfasst eine Trägereinrichtung 14 zur Aufnahme zumindest eines Lichtwellenleiters 16.

Die Trägereinrichtung 14 weist zumindest eine orthogonal zu einer Stirnseite 14a der Trägereinrichtung 14 ausgebildete Öffnung 20 auf, in welche der zumindest eine Lichtwellenleiter 16 eingefügt ist.

Die optische Einheit 10 weist ferner zumindest eine mit der Stirnseite 14a der Trägereinrichtung 14 verbundene Mikrolinse 18 auf.

Eine Anzahl von Mikrolinsen 18 pro optischer Einheit 10 ist frei wähl- bzw. konfigurierbar. Beispielsweise kann hierbei jedem Lichtwellenleiter 16 eine Mikrolinse 18 zugeordnet sein.

In der vorliegenden Ausführungsform weist die Trägereinrichtung 14 eine Mehrzahl von Öffnungen 20 auf, wobei in jede der Öffnungen ein Lichtwellenleiter 16 eingefügt ist. Jedem Lichtwellenleiter 16 ist wiederum eine Mikrolinse 18 zugeordnet.

Die einander zugewandten Stirnseiten 14a, 18a der Trägereinrichtung 14 und der zumindest einen Mikrolinse 18 jeweils sind planar ausgebildet. Dem in die zumindest eine Öffnung 20 der Trägereinrichtung 14 eingefügten zumindest einen Lichtwellenleiter 16 ist dabei die zumindest eine Mikrolinse 18 zugeordnet.

Das durch den zumindest einen Lichtwellenleiter 16 übertragene synthetisch erzeugte optische Signal S, insbesondere ein Laserpuls oder ein Leuchtdiodensignal, ist durch die zugeordnete Mikrolinse 18 auf einen LiDAR-Sensor 12 gerichtet.

Der zumindest eine Lichtwellenleiter 16 ist in der Trägereinrichtung 14 des Weiteren versetzt zu einer optischen Achse 18b der dem Lichtwellenleiter 16 zugeordneten Mikrolinse 18 angeordnet. Der zumindest eine, in die zumindest eine Öffnung 20 der Trägereinrichtung 14 eingefügte Lichtwellenleiter 16 ist ferner parallel, insbesondere orthogonal versetzt, zur optischen Achse 18b der zumindest einen Mikrolinse 18 angeordnet.

Eine Abmessung der zumindest einen Mikrolinse 18 ist überdies derart ausgebildet, dass eine Länge eines Signalpfads des synthetisch erzeugten optischen Signals S innerhalb der zumindest einen Mikrolinse 18 einer Brennweite der Mikrolinse 18 entspricht.

Die zumindest eine Mikrolinse 18 ist einstückig, insbesondere aus Kunststoff oder Glas, ausgebildet. Die zumindest eine Mikrolinse 18 ist des Weiteren an einer Austrittsseite des synthetisch erzeugten optischen Signals S konvex ausgebildet.

Der zumindest eine Lichtwellenleiter 16 ist durch eine Hülse 15, insbesondere eine Ferrule, in der in der Trägereinrichtung 14 ausgebildeten zumindest einen Öffnung 20 fixiert. Die Hülse 15 ist dabei mit dem jeweiligen Lichtwellenleiter 16 und/oder der jeweiligen Öffnung 20 verpresst oder verklebt.

Ein, insbesondere planar ausgebildeter, axialer Endabschnitt des zumindest einen Lichtwellenleiters 16 ist ferner an der, der Trägereinrichtung 14 zugewandten, Stirnseite der zumindest einen Mikrolinse 18, insbesondere an der Stirnseite der zumindest einen Mikrolinse 18 anliegend, angeordnet.

Die optische Einheit 10 ist im Wesentlichen streifenförmig ausgebildet. Darüber hinaus ist die optische Einheit 10 mit einer Mehrzahl von in Längsrichtung und in Querrichtung ausgerichteten Reihen von Mikrolinsen 18 bestückt.

Fig. 2 zeigt eine schematische Darstellung der optischen Einheit 110 zur Transmission des synthetisch erzeugten optischen Signals S für das Testsystem 101 des LiDAR-Sensors 112 gemäß einer zweiten Ausführungsform der Erfindung.

Die optische Einheit 110 umfasst eine Trägereinrichtung 114 zur Aufnahme zumindest eines Lichtwellenleiters 116, wobei die Trägereinrichtung 114 zumindest eine orthogonal zu einer Stirnseite 114a der Trägereinrichtung 114 ausgebildete Öffnung 120 aufweist, in welche zumindest ein Lichtwellenleiter 116 eingefügt ist.

Die optische Einheit 110 umfasst des Weiteren zumindest eine mit der Stirnseite 114a der Trägereinrichtung 114 verbundene Mikrolinse 118. Die einander zugewandten Stirnseiten 114a, 118a der Trägereinrichtung 114 und der zumindest einen Mikrolinse 118 sind jeweils planar ausgebildet. Dem in die zumindest eine Öffnung 120 der Trägereinrichtung 114 eingefügten zumindest einen Lichtwellenleiter 116 ist dabei die zumindest eine Mikrolinse 118 zugeordnet.

Der zumindest eine Lichtwellenleiter 116 ist ferner auf einer optischen Achse 118b der dem Lichtwellenleiter 116 zugeordneten zumindest einen Mikrolinse 118 angeordnet. Die zumindest eine Mikrolinse 118 ist überdies dazu ausgebildet, das durch den zumindest einen Lichtwellenleiter 116 übertragene synthetisch erzeugte optische Signal S, insbesondere einen Laserpuls oder ein Leuchtdiodensignal, auf eine zu der zumindest einen Mikrolinse 118 benachbart angeordnete weitere Linse 119 zu kollimieren.

Das synthetisch erzeugte optische Signal S ist durch die weitere Linse 119 des Weiteren auf einen LiDAR-Sensor 112 gerichtet. Die weitere Linse 119 ist überdies in einem vorgegebenen Abstand zu der zumindest einen Mikrolinse 118 entlang der optischen Achse 118b der Mikrolinse 118 angeordnet. Die weitere Linse 119 ist an einer Austrittsseite des synthetisch erzeugten optischen Signals S konvex ausgebildet.

Eine Anzahl von Mikrolinsen 118 pro optischer Einheit 110 ist frei wähl- bzw. konfigurierbar. Beispielsweise kann hierbei jedem Lichtwellenleiter 116 eine Mikrolinse 118 zugeordnet sein.

In der vorliegenden Ausführungsform weist die Trägereinrichtung 114 eine Mehrzahl von Öffnungen 120 auf, wobei in jede der Öffnungen ein Lichtwellenleiter 116 eingefügt ist. Jedem Lichtwellenleiter 116 ist wiederum eine Mikrolinse 118 zugeordnet.

Die zumindest eine Mikrolinse 118 ist einstückig, insbesondere aus Kunststoff oder Glas, ausgebildet. Die zumindest eine Mikrolinse 118 ist an einer Austrittsseite des synthetisch erzeugten optischen Signals S ferner konvex ausgebildet.

Der zumindest eine Lichtwellenleiter 116 ist durch eine Hülse 115, insbesondere eine Ferrule, in der in der Trägereinrichtung 114 ausgebildeten zumindest einen Öffnung 120 fixiert. Die Hülse 115 ist dabei mit dem jeweiligen Lichtwellenleiter 116 und/oder der jeweiligen Öffnung 120 verpresst oder verklebt.

Ein, insbesondere planar ausgebildeter, axialer Endabschnitt des zumindest einen Lichtwellenleiters 116 ist an der, der Trägereinrichtung 114 zugewandten, Stirnseite der zumindest einen Mikrolinse 118, insbesondere an der Stirnseite der zumindest einen Mikrolinse 118 anliegend, angeordnet. Die optische Einheit ist des Weiteren im Wesentlichen streifenförmig ausgebildet und die optische Einheit ist mit einer Mehrzahl von in Längsrichtung und in Querrichtung ausgerichteten Reihen von Mikrolinsen 118 bestückt.

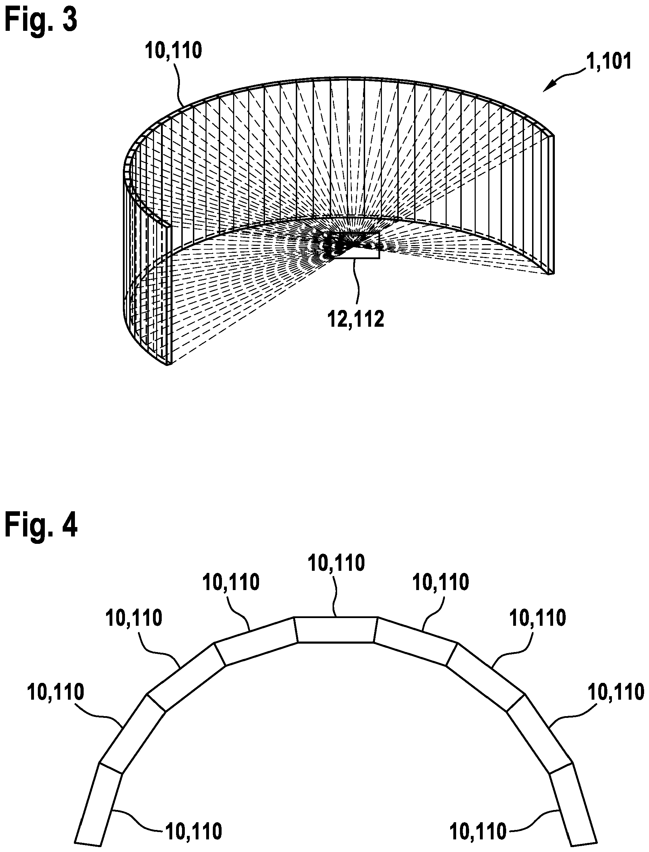

Fig. 3 zeigt eine schematische Darstellung eines Testsystems 1; 101 des LiDAR-Sensors 12; 112 gemäß Ausführungsformen der Erfindung.

Das Testsystem 1; 101 für den LiDAR-Sensors 12; 112 umfasst eine Mehrzahl der, insbesondere relativ zu einem LiDAR-Sensor 12; 112 stationär oder verfahrbar angeordneten, erfindungsgemäßen optischen Einheiten 10; 110 sowie einen LiDAR-Sensor 12; 112, auf welchen das durch die optischen Einheiten 10; 110 übertragene synthetisch erzeugte optische Signal S gerichtet ist. Die Mehrzahl von optischen Einheiten ist ferner in einem Erfassungsbereich des LiDAR-Sensors 12; 112 angeordnet.

Die Mehrzahl von optischen Einheiten 10; 110 sind zueinander benachbart, im Wesentlichen halbkreisförmig, um den LiDAR-Sensor 12; 112 herum angeordnet. Die optischen Einheiten sind dabei dazu ausgebildet, dass durch die Lichtwellenleiter 16; 116 eingespeiste synthetisch erzeugte optische Signal S um bis zu 20° gegenüber einer Ausrichtung der Lichtwellenleiter 16; 116 umzulenken, insbesondere zu brechen.

Fig. 4 zeigt eine Draufsicht des Testsystems 1; 101 des LiDAR-Sensors 12; 112 gemäß Ausführungsformen der Erfindung.

Eine Bestückung der optischen Einheiten 10; 110 mit Mikrolinsen 18; 118 ist in Abhängigkeit einer Position der jeweiligen optischen Einheit 10; 110 relativ zum LiDAR-Sensor 12; 112 variierbar.

Eine in einem Mittenabschnitt der im Wesentlichen halbkreisförmigen Anordnung der optischen Einheiten 10; 110 um den LiDAR-Sensor 12 ; 112herum angeordnete optische Einheit 10; 110 weist vorzugsweise eine größere Anzahl von Mikrolinsen 18; 118 als in Randbereichen der halbkreisförmigen Anordnung positionierte optischen Einheiten 10; 110 auf. Alternativ können die Anordnung entsprechend anderer baulicher und/oder systemischer Kriterien erfolgen.

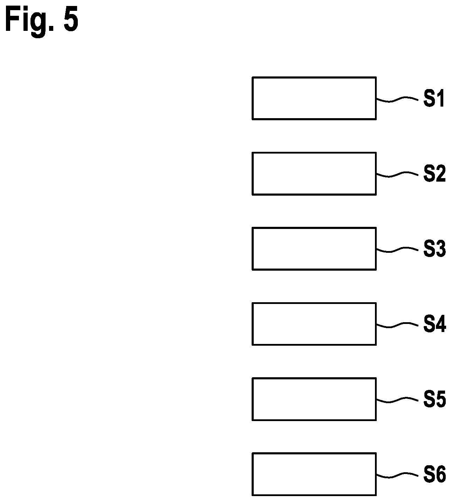

Fig. 5 zeigt ein Verfahren zum Herstellen einer optischen Einheit zur Transmission eines synthetisch erzeugten optischen Signals S für ein Testsystem 1 eines LiDAR-Sensors 12; 112 gemäß Ausführungsformen der Erfindung.

Das Verfahren umfasst ein Bereitstellen S1 einer Trägereinrichtung 14; 114 zur Aufnahme zumindest eines Lichtwellenleiters 16; 116 und ein Einbringen S2 zumindest einer orthogonal zu einer Stirnseite 14a; 114a der Trägereinrichtung 14; 114 ausgebildeten Öffnung 20; 120 in die Trägereinrichtung 14; 114.

Des Weiteren umfasst das Verfahren ein Einfügen S3 des zumindest einen Lichtwellenleiters 16; 116 in die zumindest eine Öffnung 20; 120 und Fixieren des zumindest einen Lichtwellenleiters 16; 116 in der zumindest einen Öffnung 20; 120 durch eine Hülse 15; 115 sowie ein plan Schleifen S4 der der Linse zugewandten Stirnseite des zumindest einen Lichtwellenleiters 16; 116.

Das Verfahren umfasst darüber hinaus ein Polieren S5 eines Faserendes des zumindest einen Lichtwellenleiter 16; 116 und ein Zusammenfügen S6 und Verkleben der Trägereinrichtung 14; 114 mit der zumindest einen Mikrolinse 18; 118.

### Bezugszeichenliste

- 1; 101: Testsystem
- 10; 110: optische Einheit
- 12; 112: LiDAR-Sensor
- 14; 114: Trägereinrichtung
- 14a; 114a: Stirnseite
- 15; 115: Hülse
- 16; 116: Lichtwellenleiter
- 18; 118: Mikrolinse
- 18a; 118a: Stirnseiten
- 18b; 118b: optische Achse
- 119: weitere Linse
- 20; 120: Öffnung
- S: optisches Signal
- S1-S6: Verfahrensschritte

## Patentansprüche

1. Optische Einheit (10) zur Transmission eines synthetisch erzeugten optischen Signals (S) für ein Testsystem (1) eines LiDAR-Sensors (12), mit einer Trägereinrichtung (14) zur Aufnahme zumindest eines Lichtwellenleiters (16), wobei die Trägereinrichtung (14) zumindest eine orthogonal zu einer Stirnseite (14a) der Trägereinrichtung (14) ausgebildete Öffnung (20) aufweist, in welche der zumindest eine Lichtwellenleiter (16) eingefügt ist; und
zumindest einer mit der Stirnseite (14a) der Trägereinrichtung (14) verbundenen Mikrolinse (18), wobei die einander zugewandten Stirnseiten (14a, 18a) der Trägereinrichtung (14) und der zumindest einen Mikrolinse (18) jeweils planar ausgebildet sind, wobei dem in die zumindest eine Öffnung (20) der Trägereinrichtung (14) eingefügten zumindest einen Lichtwellenleiter (16) die zumindest eine Mikrolinse (18) zugeordnet ist, wobei das durch den zumindest einen Lichtwellenleiter (16) übertragene synthetisch erzeugte optische Signal (S), insbesondere ein Laserpuls oder ein Leuchtdiodensignal, durch die zugeordnete Mikrolinse (18) auf den LiDAR-Sensor (12) gerichtet ist, und wobei der zumindest eine Lichtwellenleiter (16) in der Trägereinrichtung (14) versetzt zu einer optischen Achse (18b) der dem Lichtwellenleiter (16) zugeordneten Mikrolinse (18) angeordnet ist.

2. Optische Einheit nach Anspruch 1, wobei der zumindest eine, in die zumindest eine Öffnung (20) der Trägereinrichtung (14) eingefügte, Lichtwellenleiter (16) parallel, insbesondere orthogonal versetzt, zur optischen Achse (18b) der zumindest einen Mikrolinse (18) angeordnet ist.

3. Optische Einheit nach Anspruch 1 oder 2, wobei eine Abmessung der zumindest einen Mikrolinse (18) derart ausgebildet ist, dass eine Länge eines Signalpfads des synthetisch erzeugten optischen Signals (S) innerhalb der zumindest einen Mikrolinse (18) einer Brennweite der Mikrolinse (18) entspricht.

4. Optische Einheit (110) zur Transmission eines synthetisch erzeugten optischen Signals (S) für ein Testsystem (101) eines LiDAR-Sensors (112), mit einer Trägereinrichtung (114) zur Aufnahme zumindest eines Lichtwellenleiters (116), wobei die Trägereinrichtung (114) zumindest eine orthogonal zu einer Stirnseite (114a) der Trägereinrichtung (114) ausgebildete Öffnung (120) aufweist, in welche zumindest ein Lichtwellenleiter (116) eingefügt ist; und
zumindest einer mit der Stirnseite (114a) der Trägereinrichtung (114) verbundenen Mikrolinse (118), wobei die einander zugewandten Stirnseiten (114a, 118a) der Trägereinrichtung (114) und der zumindest einen Mikrolinse (118) jeweils planar ausgebildet sind, wobei dem in die zumindest eine Öffnung (120) der Trägereinrichtung (114) eingefügten zumindest einen Lichtwellenleiter (116) die zumindest eine Mikrolinse (118) zugeordnet ist, wobei der zumindest eine Lichtwellenleiter (116) auf einer optischen Achse (118b) der dem Lichtwellenleiter (116) zugeordneten zumindest einen Mikrolinse (118) angeordnet ist, wobei die zumindest eine Mikrolinse (118) dazu ausgebildet ist, das durch den zumindest einen Lichtwellenleiter (116) übertragene synthetisch erzeugte optische Signal (S), insbesondere einen Laserpuls oder ein Leuchtdiodensignal, auf eine zu der zumindest einen Mikrolinse (118) benachbart angeordnete weitere Linse (119) zu kollimieren, und wobei das synthetisch erzeugte optische Signal (S) durch die weitere Linse (119) auf einen LiDAR-Sensor (112) gerichtet ist.

5. Optische Einheit nach Anspruch 4, wobei die weitere Linse (119) in einem vorgegebenen Abstand zu der zumindest einen Mikrolinse (118) entlang der optischen Achse (118b) der Mikrolinse (118) angeordnet ist, wobei die weitere Linse (119) an einer Austrittsseite des synthetisch erzeugten optischen Signals (S) konvex ausgebildet ist.

6. Optische Einheit nach Anspruch 1 oder 4, wobei die zumindest eine Mikrolinse (18; 118) einstückig, insbesondere aus Kunststoff oder Glas, ausgebildet ist, und wobei die zumindest eine Mikrolinse (18; 118) an einer Austrittsseite des synthetisch erzeugten optischen Signals (S) konvex ausgebildet ist.

7. Optische Einheit nach einem der Ansprüche 1, 4 und 6, wobei der zumindest eine Lichtwellenleiter (16; 116) durch eine Hülse (15; 115), insbesondere eine Ferrule, in der in der Trägereinrichtung (14; 114) ausgebildeten zumindest einen Öffnung (20; 120) fixiert ist, wobei die Hülse (15; 115) mit dem jeweiligen Lichtwellenleiter (16; 116) und/oder der jeweiligen Öffnung (20; 120) verpresst oder verklebt ist.

8. Optische Einheit nach einem der Ansprüche 1, 4, 6 und 7, wobei ein, insbesondere planar ausgebildeter, axialer Endabschnitt des zumindest einen Lichtwellenleiters (16; 116) an der, der Trägereinrichtung (14; 114) zugewandten, Stirnseite der zumindest einen Mikrolinse (18; 118), insbesondere an der Stirnseite der zumindest einen Mikrolinse (18; 118) anliegend, angeordnet ist.

9. Optische Einheit nach einem der Ansprüche 1, 4, 6, 7 und 8, wobei die optische Einheit (10; 110) im Wesentlichen streifenförmig ausgebildet ist, und wobei die optische Einheit (10; 110) mit einer Mehrzahl von in Längsrichtung und in Querrichtung ausgerichteten Reihen von Mikrolinsen (18; 118) bestückt ist.

10. Testsystem (1; 101) für einen LiDAR-Sensors (12; 112), mit
einer Mehrzahl von, insbesondere relativ zu einem LiDAR-Sensor (12; 112) stationär oder verfahrbar angeordneten, optischen Einheiten (10; 110) nach einem der Ansprüche 1 bis 9; und
einem LiDAR-Sensor (12; 112), auf welchen das durch die optischen Einheiten (10; 110) übertragene synthetisch erzeugte optische Signal (S) gerichtet ist, wobei die Mehrzahl von optischen Einheiten (10; 110) in einem Erfassungsbereich des LiDAR-Sensors (12; 112) angeordnet ist.

11. Testsystem nach Anspruch 10, wobei die Mehrzahl von optischen Einheiten (10; 110) zueinander benachbart, im Wesentlichen halbkreisförmig, um den LiDAR-Sensor (12; 112) herum angeordnet sind.

12. Testsystem nach Anspruch 10 oder 11, wobei die optischen Einheiten (10; 110) dazu ausgebildet sind, dass durch die Lichtwellenleiter (16; 116) eingespeiste synthetisch erzeugte optische Signal (S) um bis zu 20° gegenüber einer Ausrichtung der Lichtwellenleiter (16;116) umzulenken, insbesondere zu brechen.

13. Testsystem nach einem der Ansprüche 10 bis 12, wobei eine Bestückung der optischen Einheiten (10; 110) mit Mikrolinsen (18; 118) in Abhängigkeit einer Position der jeweiligen optischen Einheit (10; 110) relativ zum LiDAR-Sensor (12; 112) variierbar ist.

14. Testsystem nach Anspruch 13, wobei eine in einem Mittenabschnitt der im Wesentlichen halbkreisförmigen Anordnung der optischen Einheiten (10; 110) um den LiDAR-Sensor (12; 112) herum angeordnete optische Einheit (10; 110) eine größere Anzahl von Mikrolinsen (18; 118) als in Randbereichen der halbkreisförmigen Anordnung positionierte optischen Einheiten (10; 110) aufweist.

15. Verfahren zum Herstellen einer optischen Einheit (10; 110) zur Transmission eines synthetisch erzeugten optischen Signals (S) für ein Testsystem (1; 101) eines LiDAR-Sensors (12; 112), mit den Schritten: Bereitstellen (S1) einer Trägereinrichtung (14; 114) zur Aufnahme zumindest eines Lichtwellenleiters (16; 116);
Einbringen (S2) zumindest einer orthogonal zu einer Stirnseite (14a; 114a) der Trägereinrichtung (14; 114) ausgebildeten Öffnung (20; 120) in die Trägereinrichtung (14; 114);
Einfügen (S3) des zumindest einen Lichtwellenleiters (16; 116) in die zumindest eine Öffnung (20; 120) und Fixieren des zumindest einen Lichtwellenleiters (16; 116) in der zumindest einen Öffnung (20; 120) durch eine Hülse (15; 115);
plan Schleifen (S4) der der Linse zugewandten Stirnseite des zumindest einen Lichtwellenleiters (16; 116);
Polieren (S5) eines Faserendes des zumindest einen Lichtwellenleiter (16; 116); und
Zusammenfügen (S6) und Verkleben der Trägereinrichtung (14; 114) mit der zumindest einen Mikrolinse (18; 118).
